(19) Europäisches Patentamt
European Patent Office
Office européen des brevets

(11) **EP 3 103 561 A1**

(12) **EUROPEAN PATENT APPLICATION**
published in accordance with Art. 153(4) EPC

(43) Date of publication:
**14.12.2016 Bulletin 2016/50**

(51) Int Cl.:
**B22C 1/18** *(2006.01)*      **B22C 9/02** *(2006.01)*

(21) Application number: **15812928.8**

(22) Date of filing: **09.03.2015**

(86) International application number:
**PCT/JP2015/056884**

(87) International publication number:
**WO 2016/143051 (15.09.2016 Gazette 2016/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Technology Research Association For Future Additive Manufacturing Chuo-ku Tokyo (JP)**

(72) Inventors:
• **NAGAI, Yasuhiro**
 **Takasaki-shi**
 **Gunma 370-0032 (JP)**
• **HATORI, Yuuki**
 **Takasaki-shi**
 **Gunma 370-0032 (JP)**
• **OOBA, Yoshikazu**
 **Yokohama-shi**
 **Kanagawa 222-0033 (JP)**
• **IMAMURA, Satoshi**
 **Tsukuba-shi**
 **Ibaraki 305-8564 (JP)**
• **OKANE, Toshimitsu**
 **Tsukuba-shi**
 **Ibaraki 305-8564 (JP)**

(74) Representative: **TBK Bavariaring 4-6 80336 München (DE)**

(54) **GRANULAR MATERIAL, DEVICE FOR PRODUCING THREE-DIMENSIONAL-LAMINATE MOULDING MOULD, AND METHOD FOR PRODUCING THREE-DIMENSIONAL-LAMINATE MOULDING MOULD**

(57)   In order to generate no harmful gas during pouring and reduce a gas defect as one cast metal defect in the manufacture of a three-dimensional lamination-shaped mold, this invention provides a granular material for use in shaping a three-dimensional lamination mold, the granular material being coated with water glass which is activated and cured by a water-soluble ester. The residual water content in the granular material is 1% or less. The water glass is one of a sodium silicate solution, a potassium silicate solution, as alkali metal silicate solutions and a mixture thereof.

**F I G.  1**

**Description**

TECHNICAL FIELD

The present invention relates to a three-dimensional lamination-shaped mold manufacturing technique.

BACKGROUND ART

A mold is necessary to manufacture a cast metal. Examples of the mold are a heat-curing mold, self-curing mold, and gas-curing mold. For example, the self-curing mold is generally manufactured by a method of filling kneaded sand containing a refractory granular material, hardener, and binder in a wooden model or resin model (to be collectively called "a model" hereinafter), and curing the binder. To manufacture a mold having a complicated shape, however, it is necessary to increase the number of models, and this complicates the process. Also, even when the number of models can be increased, no mold can be manufactured if the models cannot be removed from the mold.

To solve these problems, a mold manufacturing technique using three-dimensional lamination shaping capable of directly manufacturing a mold without using any model has been proposed. Three-dimensional lamination shaping is a method of manufacturing a mold by directly using a three-dimensional shape input on a CAD (Computer Aided Design) system as a stereomodel (three-dimensional model).

A known example of this mold manufacturing technique using three-dimensional lamination shaping is a method (two-component self-curing mold) of repeating an operation of laminating (recoating) kneaded sand obtained by mixing a refractory granular material and liquid hardener and printing a binder on the kneaded sand based on CAD data, and removing the kneaded sand from an unprinted portion after the binder is cured (see, e.g., patent literature 1).

CITATION LIST

PATENT LITERATURE

Patent literature 1: Japanese Patent No. 5249447

SUMMARY OF THE INVENTION

TECHNICAL PROBLEM

Unfortunately, a mold manufactured by three-dimensional lamination shaping of a two-component self-curing mold is manufactured by using an organic binder. When performing pouring (i.e., when pouring a molten metal into the mold), therefore, the organic binder forming the mold thermally decomposes and generates a harmful gas. This harmful gas deteriorates the working environment, and also causes a gas defect (pinhole or blow hole) as one defect of cast metal casting.

The present invention enables to provide a technique of solving the above-described problem.

SOLUTION TO PROBLEM

One aspect of the present invention provides a granular material for use in shaping a three-dimensional lamination mold, the granular material being coated with water glass which is activated and cured by a water-soluble ester and selectively binds the granular material.

Another aspect of the present invention provides an apparatus for manufacturing a three-dimensional lamination mold, in said apparatus,

a granular material coated with water glass being used, as a shaping material which is spread into layers and selectively bound, and

a water-soluble ester dissolved in water being used, as an activating material which selectively binds the granular material coated with the water glass.

Still another aspect of the present invention provides a method of manufacturing a three-dimensional lamination mold, said method comprising

coating a granular material for use in shaping a three-dimensional lamination mold with water glass,

spreading the granular material coated with the water glass into layers,

selectively discharging a water-soluble ester dissolved in water to the granular material spread into layers, and curing the water soluble ester, such that the granular material spread into layers is bound in accordance with a three-dimensional laminated mold as an object, and

repeating the spreading and the curing until the three-dimensional laminated mold as the object is shaped.

ADVANTAGEOUS EFFECTS OF INVENTION

According to the present invention, in the manufacture of a three-dimensional lamination-shaped mold, no harmful gas is generated during pouring, so a gas defect as one cast metal defect can be reduced.

BRIEF DESCRIPTION OF DRAWINGS

Fig. 1 is view showing a three-dimensional lamination-shaped mold manufacturing apparatus of this embodiment and an outline of the shaping procedure; and
Fig. 2 is a view showing a columnar laminated product manufacturing by examples.

DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

«Three-Dimensional Lamination-Shaped Mold Manufacturing Apparatus»

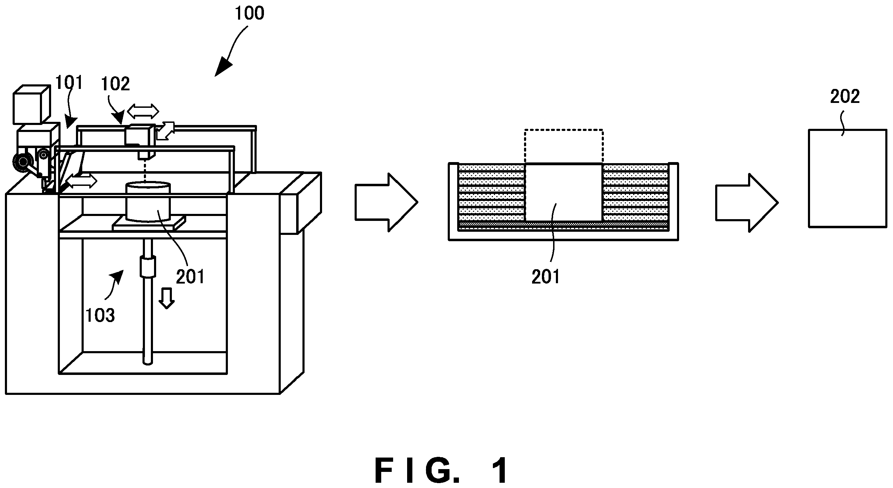

Fig. 1 is a view showing an outline of the shaping procedure of a three-dimensional lamination-shaped mold manufacturing apparatus 100 of this embodiment.
The three-dimensional lamination-shaped mold manufacturing apparatus 100 mainly includes a blade mechanism 101, printing nozzle head mechanism 102, and support table mechanism 103. The apparatus further includes a controller (not shown) for controlling the operation of each mechanism by using three-dimensional data of a shaping target.
The blade mechanism 101 includes a recoater, and laminates a water-glass-coated granular material (to be also referred to as coating sand hereinafter) having a predetermined thickness, as the material of a three-dimensional lamination-shaped mold, on a shaped portion already bound by an activating material made of a water-soluble ester. The printing nozzle head mechanism 102 prints a water-soluble ester on the laminated granular material, and selectively binds the water-glass-coated granular material, thereby shaping one layer. When shaping of one layer is complete, the shaping table mechanism 103 moves down by the distance of one layer, thereby implementing lamination shaping by a predetermined thickness.
Fig. 1 shows an unfinished shaped product 201 and finished shaped product 202.

«Manufacturing Materials of Three-Dimensional Lamination-Shaped Mold»

As manufacturing materials for use in the three-dimensional lamination-shaped mold manufacturing apparatus 100 of this embodiment, the granular material and binder will be explained in detail below.

(Granular Material)

Examples of the granular material of this embodiment are natural sand such as silica sand, olivine sand, zircon sand, chromite sand, alumina sand, and mullite sand, and artificial sand, each of which is a granular material having a fire resistance (to be also referred to as a refractory granular material hereinafter). It is also possible to use collected used natural sand or artificial sand, or regenerated used natural sand or artificial sand.
Artificial sand is generally obtained by a sintering method, fusion method, or flame-fusion method by using bauxite as a raw material. Note that the practical conditions and the like of the sintering method, fusion method, or flame-fusion method are not particularly limited, so artificial sand need only be manufactured by using the well-known conditions and the like described in, e.g., Japanese Patent Laid-Open Nos. 5-169184, 2003-251434, and 2004-202577.
The average grain size of the refractory granular material is preferably 50 to 300 $\mu$m, and more preferably, 75 to 150 $\mu$m. When the average grain size is 300 $\mu$m or less, a three-dimensional lamination-shaped mold having a high surface phase degree is obtained.
"A surface phase degree" herein mentioned is the surface roughness of the three-dimensional lamination-shaped mold in the lamination direction.
As the refractory granular material, artificial sand hardly expands due to fire or heat (the thermal expansibility is low). If the thermal expansibility is high, a veining defect readily occurs. "A veining defect" herein mentioned is a burr-like defect which occurs when a mold cracks due to thermal expansion during casting and a molten metal flows into the crack. When artificial sand is used as the refractory granular material, it is possible to manufacture a large-sized mold or a mold which can be used even when pouring a high-temperature molten metal (that is, a veining defect hardly occurs).

Note that natural sand is more inexpensive than artificial sand, so it is favorable to mix natural sand and artificial sand in order to reduce the manufacturing cost.

Silica sand is favorable as natural sand. This is so because, e.g., zircon sand is relatively expensive as natural sand, chromite sand cannot easily be discarded because it contains chromium, and olivine sand tends to increase the surface phase degree of a three-dimensional lamination-shaped mold. Silica sand can alleviate these problems.

A mold is used to cast a cast metal, and disassembled after casting in order to extract the cast metal. That is, the cast metal is a final object (final product), but the mold is finally destroyed. Accordingly, a readily discardable inexpensive material having a sufficiently low surface phase degree is preferable.

(Water Glass Coating)

In this embodiment, the surface of the refractory granular material is coated with water glass as an inorganic binder, thereby forming the material of a shaped product. First, the refractory granular material is heated to about 110°C in advance. Then, a sodium silicate solution or the like is added as water glass to the heated refractory granular material, and the solvent is volatilized by the heat of the heated refractory granular material and stirring of the material. The surface of the refractory granular material is coated with water glass as an inorganic binder by the series of processes described above.

Note that the amount of water contained in the coated refractory granular material is preferably 1% or less. If the water content exceeds 1%, the fluidity of the coated refractory granular material decreases, and recoating becomes difficult.

As water glass, it is possible to use sodium silicate (more specifically, No. 1, 2, or 3 or sodium metasilicate (a first or second kind) described in JIS K 1408:1966), potassium silicate, or a mixture thereof.

As a preferred form of water glass, it is preferable to use water glass in which the molar ratio ($SiO_2/M$) of $SiO_2$ to M (M = $K_2O$ or $Na_2O$) is 1.6 to 4.0, it is more preferable to use water glass having a molar ratio of 2.1 to 2.6, and it is further preferable to use water glass having a molar ratio of 2.15 to 2.5. The curing rate during curing tends to decrease when the molar ratio is low, and tends to increase when the molar ratio is high.

The Baumé degree of water glass at 20°C is preferably 30 to 60, and more preferably, 45 to 55. If the Baumé degree of water glass decreases, the viscosity decreases, so the refractory granular material is coated with water glass more easily, but the amount of residual water tends to increase. On the other hand, if the Baumé degree increases, the viscosity increases, so the refractory granular material is hardly coated with water glass, but the amount of residual water tends to decrease.

The mixing amount of water glass is preferably 1 to 8 pts.mass, more preferably, 2 to 5 pts.mass, and further preferably, 2.5 to 3.5 pts.mass, with respect to 100 pts.mass of the refractory granular material. When the mixing amount of water glass is 1 pts.mass or more, a sufficient mold strength is obtained when manufacturing a lamination-shaped mold.

On the other hand, when mixing amount of water glass is 8 pts.mass or less, it is possible to suppress vitrification more during pouring, and well maintain the collapsibility of a cast mold. It is also possible to more economically manufacture a lamination-shaped mold.

(Water-Soluble Ester as Activating Material)

As a water-soluble ester, triethylene glycol acetate, γ-butyloractone, or a mixture thereof is dissolved in water. The concentration of the aqueous solution is preferably 10 to 90 mass%, and more preferably, 20 to 50 mass%.

The ester content of a water-soluble ester to be printed in preferably 0.2 to 1.6 pts.mass, and more preferably, 0.4 to 1 pts.mass, with respect to 100 pts.mass of the refractory aggregate coated with water glass. When the ester content of a water-soluble ester is 0.2 pts.mass or more, it is possible to sufficiently cure the water glass coating.

On the other hand, when the ester content of a water-soluble ester is 1.6 pts.mass or less, it is possible to prevent a decrease in adhesion caused by the solvent effect of an excess water-soluble ester which does not participate in the curing reaction.

«Granular Material Laminating Process and Inorganic Binder Printing Process»

For example, the processes of laminating the water-glass-coated refractory granular material and printing a water-soluble ester dissolved in water on the laminated refractory granular material are performed as follows.

First, a refractory granular material is laminated on the bottom surface of a metal case placed in a three-dimensional lamination shaping apparatus (available from CMET) using a printing shaping method, by the blade mechanism 101 including the recoater. Then, the printing nozzle head is scanned on the laminated refractory granular material by the printing nozzle head mechanism 102 based on data obtained by 3DCAD design of the shape of a three-dimensional lamination-shaped mold, thereby printing an aqueous 50-mass% solution of triethylene glycol acetate (to be referred to as an aqueous ester solution hereinafter) such that the discharge amount is 1.2 pts.mass with respect to 100 pts.mass of the laminated sand. The bottom surface of the metal case is a shaping table and vertically movable. After the aqueous ester solution is printed, the bottom surface (shaping table) of the metal case is moved down by one layer, the refractory granular material is laminated in the same manner as above, and the aqueous ester solution is printed on it. These operations are repeated. The thickness of one layer is preferably 100 to 500 $\mu$m, and more preferably, 200 to 300 $\mu$m.

The coating amount when printing the aqueous ester solution is not particularly limited. When the mass of one layer of the granular material is 100 pts.mass, however, the coating amount is preferably 0.1 to 10 pts.mass, and more preferably, 0.2 to 3 pts.mass, as the amount of ester.

«Functions and Effects of This Embodiment»

In this embodiment, the refractory granular material is coated with water glass, so the fluidity close to that of dry sand is ensured. In addition, the refractory granular material in the unprinted portion is directly reusable.

When a three-dimensional lamination-shaped mold is manufactured by using natural sand such as silica sand as the refractory granular material, a veining defect easily occurs in the obtained mold. The reason for this is probably as follows.

Since natural sand has a phase transition point, the volume expands by the heat of casting. In particular, the inside (a portion in contact with a molten metal) of the mold easily expands because the heat of the molten metal is easily transferred, but the outside of the mold hardly expands because the heat of the molten metal is hardly transferred. This difference between the expansions of the inside and outside generates a crack inside the mold.

By contrast, artificial sand of this embodiment hardly causes phase transition, and hence hardly expands by the heat of casting. Accordingly, a mold manufactured by using artificial sand hardly causes a veining defect. Also, the ease with which a veining defect occurs increases as the size of a mold increases. The reason for this is presumably as follows.

A molten metal poured into a mold cools down and solidifies from the outside (a portion in contact with the mold) rather than the central portion. When the mold is small, the molten metal cools down within a short time, so the molten metal on the outside cools down and solidifies before the mold cracks. Even when the mold cracks after that, therefore, it is perhaps possible to prevent the molten metal from flowing into the crack. On the other hand, when the mold is large, the molten metal takes a long time to cool down. Therefore, the mold probably cracks and causes a veining defect before the molten metal on the outside completely solidifies.

Also, the three-dimensional lamination-shaped mold manufacturing apparatus using the water-glass-coated refractory granular material and a water-soluble ester according to this embodiment can manufacture a three-dimensional lamination-shaped mold at a speed higher than 50,000 cc, e.g., at a speed of 100,000 cc, and can also maintain the strength of the three-dimensional lamination-shaped mold.

For example, the upper limit of the manufacturing speed of the two-component self-curing mold described in patent literature 1 is 50,000 cc. This is so because the liquid hardener added to the granular material decreases the fluidity, so the fluidity is maintained by reducing the liquid hardener, and the amount of binder is increased, and as a consequence the curing time prolongs. Furthermore, when the fluidity of the granular material is low, it is necessary to add vibrations to the blade mechanism 101 including the recoater.

Since the water-glass-coated granular material of this embodiment is spherical and dry, the recoating property improves, and this makes high-speed manufacture of a three-dimensional lamination-shaped mold possible. Furthermore, rapid selective binding of water glass can be implemented by printing of a water-soluble ester.

Examples

Examples of the present invention will be explained in more detail below, but the present invention is not limited to these examples. Note that a water-soluble ester and coating sand used in these examples will be presented below, and methods of measuring the thermal expansion coefficient and generated gas component of a test piece obtained by each example will be presented below.

(Water-Soluble Ester)

An aqueous ester solution was prepared by mixing 50 pts.mass of triethylene glycol diacetate and 50 pts.mass of water.

(Coating Sand)

A refractory granular material was heated to 110°C by a sand heater. 3.0 pts.mass of water glass (molar ratio ($SiO_2$/$Na_2O$: 2.50, Baumé degree: 50 (20°C))) were added to 100 pts.mass of the heated refractory granular material, and water as a solvent was volatilized by stirring the material for 5 min. After that, the material was cooled to room temperature (25°C), and passed through a sieve having an opening of 0.6 mm, thereby forming coating sand.

(Measurement of Thermal Expansion Coefficient)

The thermal expansion coefficient of a test piece was measured as follows based on JACT test method M-2 (a rapid thermal expansion coefficient measurement test method of thermal expansion test methods).
The test piece was inserted into a furnace heated to 1,000°C, the expansion was measured for 5 min by a thermal expansion meter, and the thermal expansion coefficient was calculated by:

$$\text{Thermal expansion coefficient } (\%) = \{\text{expansion(mm)/length (mm) of unheated test piece}\} \times 100$$

(Gas Component Measurement)

Gas component qualitative analysis was performed on the lamination-shaped sand mold at a temperature of 350°C by using GC-MS (Q1000-GCMS manufactured by JEOL).

«Results of Examples and Comparative Examples»

Examples 1 and 2 and Comparative Examples 1 and 2 will be explained below in order with reference to the results of these examples and comparative examples shown in Table 1.

[Table 1]

| | | | Example 1 | Example 2 | Comparative Example 1 | Comparative Example 2 |
|---|---|---|---|---|---|---|
| Refractory granular material | | | Silica sand | Sintered artificial sand | Silica sand | Sintered artificial sand |
| Evaluation | Feasibility of lamination shaping | X-axis direction | Feasible | Feasible | Feasible | Feasible |
| | | Y-axis direction | Feasible | Feasible | Feasible | Feasible |
| | | Z-axis direction | Feasible | Feasible | Feasible | Feasible |
| | Thermal expansion coefficient (%) | X-axis direction | 1.51 | 0.15 | 1.49 | 0.12 |
| | | Y-axis direction | 1.50 | 0.16 | 1.50 | 0.15 |
| | | Z-axis direction | 1.51 | 0.15 | 1.50 | 0.14 |
| Generated gas components by GC-MS measurement | | | Water | Water | Methyl furan, ethylbenzene, xylene, and sulfur dioxide | Methyl furan, ethylbenzene, xylene, and sulfur dioxide |

«Examples 1 & 2»

[Example 1]

Water-glass-coated coating sand was prepared by using silica sand (FS001-EU distributed by EX ONE, average grain size = 106 $\mu$m) as a refractory granular material.

This coating sand was laminated on the bottom surface of a metal case placed in a three-dimensional laminating apparatus (manufactured by CMET) using a printing shaping method, by a blade mechanism including a recoater.

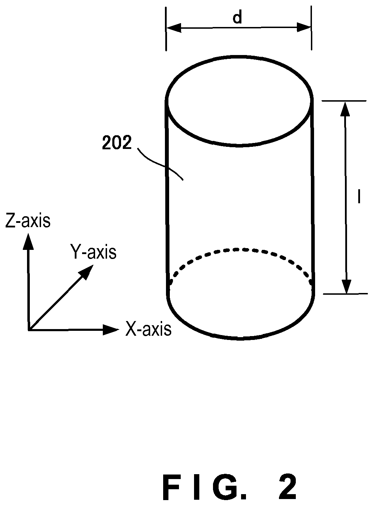

Then, a printing nozzle head was scanned on the laminated coating sand based on data obtained by 3DCAD design of the shape of a three-dimensional lamination-shaped mold, thereby printing an aqueous ester solution such that the discharge amount was 1.2 pts.mass with respect to 100 pts.mass of the laminated sand. After the aqueous ester solution was printed, the bottom surface (a shaping table) of the metal case was moved down by one layer (280 $\mu$m), the coating sand was laminated in the same manner as above, and the aqueous ester solution was printed on it. By repeating this process including lamination and printing, a columnar laminated product having a diameter d of 30 mm and a length L of 50 mm as shown in Fig. 2 was manufactured.

Note that three types of the laminated products were manufactured by repeating the process of laminating the granular material in the three directions of X-, Y-, and Z-axes shown in Fig. 2, and printing the aqueous ester solution on the laminated granular material. In this process, whether lamination was feasible (the feasibility of lamination) in each direction was visually checked. Table 1 shows the checking results of the feasibility of lamination.

After printing, a columnar test piece (three-dimensional lamination-shaped mold) having a diameter of 30 mm and a length of 50 mm was obtained by removing the coating sand from an aqueous ester solution unprinted portion by a brush.

The thermal expansion coefficient and gas component of each obtained test piece were measured. Table 1 shows the measurement results of the thermal expansion coefficient and gas component.

Also, the coating sand in the aqueous ester solution unprinted portion was not regenerated but reused as reusable sand.

[Example 2]

Test pieces were manufactured and evaluated following the same procedures as in Example 1, except that artificial sand (CERABEADS X #1450 manufactured by ITOCHU CERATECH, average grain size = 106 $\mu$m) obtained by a sintering method was used as the refractory granular material. Table 1 shows the evaluation results of Example 2.

Also, the refractory granular material in an aqueous ester solution unprinted portion was not regenerated but reused as reusable sand.

«Comparative Examples 1 & 2»

[Comparative Example 1]

A hardener solution containing 55 pts.mass of xylene sulfonic acid which is a liquid at room temperature (20°C), 10 pts.mass of sulfuric acid, and 35 pts.mass of water was prepared. Kneaded sand was formed by using 0.3 pts.mass of the hardener and silica sand (FS001-EU distributed by EX ONE, average grain size = 106 $\mu$m).

A binder was formed by mixing 0.3 pts.mass of N-$\beta$(aminoethyl)$\gamma$-aminopropylmethyldimethoxysilane in 100 pts.mass of a solution mixture containing 90 pts.mass of furfuryl alcohol and 10 pts.mass of bisphenol A.

The kneaded sand was laminated on the bottom surface of a metal case placed in a three-dimensional laminating apparatus (manufactured by CMET) using a printing shaping method, by a blade mechanism including a recoater. Then, a printing nozzle head was scanned on the laminated kneaded sand based on data obtained by 3DCAD design of the shape of a three-dimensional lamination-shaped mold, thereby printing the binder. After the binder was printed, the bottom surface (a shaping table) of the metal case was moved down by one layer (280 $\mu$m), the refractory granular material was laminated in the same manner as above, and the binder was printed on it. By repeating this process including lamination and printing, a columnar laminated product having a diameter d of 30 mm and a length L of 50 mm as shown in Fig. 2 was manufactured.

Note that three types of the laminated products were manufactured by repeating the process of laminating the granular material in the three directions of X-, Y-, and Z-axes shown in Fig. 2, and printing the binder on the laminated refractory granular material. In this process, whether lamination was feasible (the feasibility of lamination) in each direction was visually checked. Table 1 shows the checking results of the feasibility of lamination.

After printing, a columnar test piece (three-dimensional lamination-shaped mold) having a diameter of 30 mm and a length of 50 mm was obtained by removing the kneaded sand from a binder unprinted portion by a brush.

The thermal expansion coefficient and gas component of each obtained test piece were measured. Table 1 shows the measurement results of the thermal expansion coefficient and gas component.

Also, since the kneaded sand in a binder unprinted portion was green, the kneaded sand was regenerated by calcination and reused.

[Comparative Example 2]

0.3 pts.mass of the hardener prepared in Comparative Example 1 were added to 100 pts.mass of artificial sand (CERABEADS X #1450 manufactured by ITOCHU CERATECH, average grain size = 106 $\mu$m) obtained by a sintering method, and the obtained material was kneaded, thereby obtaining kneaded sand.

Test pieces were manufactured and evaluated following the same procedures as in Comparative Example 1, except that the obtained kneaded sand was used as the refractory granular material. Table 1 shows the evaluation results of Comparative Example 2.

Also, since the kneaded sand in a binder unprinted portion was green, the kneaded sand was regenerated by calcination and reused as reusable sand.

<<Evaluation of Examples and Comparative Examples>>

The refractory granular materials used in the examples had high fluidity, so recoating of these materials was well possible in the directions of all of the X-, Y-, and Z-axes. Also, water was generated in these examples, but no harmful gas was generated.

By contrast, methyl furan, ethylbenzene, xylene, and sulfur dioxide as harmful gas components were generated from the molds of the comparative examples, so the working environment may deteriorate. In addition, these harmful gas components are also components which cause a cast metal gas defect, so a casting defect may occur.

**Claims**

1. A granular material for use in shaping a three-dimensional lamination mold, the granular material being coated with water glass which is activated and cured by a water-soluble ester.

2. The granular material according to claim 1, wherein a residual water content in said granular material is not more than 1%.

3. The granular material according to claim 1 or 2, wherein said water glass is one of a sodium silicate solution, a potassium silicate solution, as alkali metal silicate solutions and a mixture thereof.

4. The granular material according to any one of claims 1 to 3, wherein said granular material is coated with said water glass by adding a solution prepared by dissolving said water glass in a solvent to a heated granular material, and volatilizing the solvent by heat of said heated granular material and stirring of the solution.

5. The granular material according to any one of claims 1 to 4, wherein said granular material is refractory artificial sand made by one of a sintering method, a fusion method and a flame-fusion method.

6. The granular material according to any one of claims 1 to 5, wherein said water-soluble ester is in a state in which one of triethylene glycol diacetate, $\gamma$-butyrolactone and a mixture thereof is dissolved in water.

7. An apparatus for manufacturing a three-dimensional lamination-shaped mold, in said apparatus:

   a granular material coated with water glass being used, as a shaping material which is spread into layers and selectively bound; and
   a water-soluble ester dissolved in water being used, as an activating material which selectively binds said granular material coated with said water glass.

8. A method of manufacturing a three-dimensional lamination-shaped mold, said method comprising:

   coating a granular material for use in shaping a three-dimensional lamination mold with water glass;
   spreading the granular material coated with the water glass into layers;

selectively discharging a water-soluble ester dissolved in water to the granular material spread into layers, and curing the water soluble ester, such that the granular material spread into layers is bound in accordance with the three-dimensional laminated mold as an object; and
repeating the spreading and the curing until the three-dimensional laminated mold as the object is shaped.

**F I G. 1**

d

202

l

Z-axis

Y-axis

X-axis

# F I G. 2

**INTERNATIONAL SEARCH REPORT**

International application No.

PCT/JP2015/056884

A.   CLASSIFICATION OF SUBJECT MATTER
*B22C1/18(2006.01)i, B22C9/02(2006.01)i*

According to International Patent Classification (IPC) or to both national classification and IPC

B.   FIELDS SEARCHED

Minimum documentation searched (classification system followed by classification symbols)
B22C1/00-1/26, B22C9/00-9/30

Documentation searched other than minimum documentation to the extent that such documents are included in the fields searched

| | | |
|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | WO 2014/098129 A1  (Asahi Organic Chemicals Industry Co., Ltd.), 26 June 2014 (26.06.2014), claims; paragraphs [0015] to [0040] (Family: none) | 1-8 |
| Y | JP 2001-232442 A  (Gunei Chemical Industry Co., Ltd.), 28 August 2001 (28.08.2001), paragraph [0011] (Family: none) | 1-8 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 April 2015 (06.04.15) | 21 April 2015 (21.04.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2015/056884

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-519042 A (Ashland-Südchemie-Kernfest GmbH), 03 June 2010 (03.06.2010), paragraph [0042] & US 2010/0173767 A1 & WO 2008/101668 A1 & EP 2329900 A2 & DE 202008018001 U & CA 2678292 A & KR 10-2009-0113877 A & CN 101663112 A & MX 2009008857 A & ZA 200905640 A & RU 2009134089 A & AU 2008217190 A & UA 100853 C | 1-8 |
| A | JP 9-141386 A (Toyota Motor Corp.), 03 June 1997 (03.06.1997), claim 1 (Family: none) | 8 |

Form PCT/ISA/210 (continuation of second sheet) (July 2009)

**REFERENCES CITED IN THE DESCRIPTION**

**Patent documents cited in the description**

- JP 5249447 B
- JP 5169184 A
- JP 2003251434 A
- JP 2004202577 A